# EUROPÄISCHE PATENTANMELDUNG

(11) **EP 3 388 220 A2**
(43) Veröffentlichungstag der Anmeldung: **17.10.2018**
(21) Anmeldenummer: 18000283.4
(22) Anmeldetag: 21.03.2018
(51) Int. Cl.: B29C 63/02

(54) **VERFAHREN ZUM AUFBRINGEN EINER FOLIE AUF EINE AUCH UNEBENE UNTERLAGE, ETWA AUF EIN TEIL EINER KRAFTFAHRZEUG-KAROSSERIE**

(30) Priorität: 21.03.2017 DE 102017002701
(71) Anmelder: AEP Automotive Engineering Projects GmbH, 29556 Uelzen (DE)
(72) Erfinder: Datko, Krystian, D 38104 Braunschweig (DE); Grumbrecht, Wolfgang, D 29556 Suderburg (DE); Hinrichs, Wolfgang, D 29556 Suderburg (DE); Seifert, Michael, D 29525 Uelzen (DE)

(57) **Zusammenfassung**

Die Erfindung betrifft ein Verfahren, eine aufgespannte Applizierfolie auf eine auch unebene Unterlage aufzubringen. Dabei wird die Folie nach Maßgabe ihrer Anisotropie in ihrer Haupt-Streckrichtung mit Untermaß gegenüber der Kontur der Unterlage zugeschnitten und vorübergehend bis zum Überschreiten der Elastizitätsgrenze gedehnt. Quer dazu kann ein gezieltes Zuschnitt-Übermaß infolge Querkontraktion auf die Geometrie der zu folierenden Unterlage zurückgeführt werden. Die Zugspannungsverteilung in der Applizierfolie kann durch lokal eingebrachte Entlastungen und durch, in auch voneinander abweichenden Richtungen, paralleles Angreifen individuell steuerbarer Spannmittel ggf. mit Einsatz von Messtechnik optimiert werden, ehe die dann auf der Unterlage abgeformte Applizierfolie infolge dazwischen gelegener Adhäsionsschicht mit jener verklebt wird.

## Beschreibung

Die Erfindung betrifft ein Verfahren gemäß dem Oberbegriff des Patentanspruches 1.

Ein derartiges Verfahren ist etwa aus der EP 2 226 183 A2 bekannt. Danach soll eine unbeschnitten unter viel Übermaß horizontal schwebend aufgespannte Lackfolie mit rückwärtiger Kleberbeschichtung dadurch automatisch gesteuert auf eine dagegen kleinflächige, auch unebene Unterlage In Form etwa der Motorhaube einer Kraftfahrzeugkarosserie appliziert werden, dass die Folie und die Unterlage aufeinander zu bewegt werden, bis wenigstens ein konvexer Bereich jener Unterlage gegen die Folle rückwärtig andrückt. Dann wird eine elastische Aufdrückwalze programmgesteuert über die Sichtfläche der Folie hinweg verfahren, bis diese vollflächig der Kontur der Unterlage folgend auf diese aufgeklebt ist. Die dazu von einer Vorratsrolle abgezogene Folle wurde dafür oberhalb der Unterlage mittels einer Spanneinrichtung in der Schwebe gehalten. Bei der handelt es sich um zueinander parallel ausgerichtete Spannrollen, auf denen die einander gegenüberliegenden Ränder der Folie befestigt sind. In der Praxis Ist dabei das Auftreten einer gewissen Welligkeit in verschiedenen Bereichen der Folle unvermeidbar, da quer zur Haupt-Streckrichtung in der Folie eine Kontraktion eintritt. Dabei tritt ein Faltenwurf desto stärker auf, als die Struktur und damit das Verhalten von modernen Kunststoff-Folien nicht isotrop ist. Daraus folgt, dass die Folie bei der Applikation auf unebene Bereiche der Unterlage in Richtung des Angriffes der Spanneinrichtung ein anderes Dehnungsverhalten zeigt, als etwa quer dazu. Wenn eine solche Folie konturengerecht über eine markante lokale Erhebung auf der Oberfläche der zu folierenden Unterlage abgeformt wird, gefährdet das die Struktur der Kleberschicht ebenso wie die der Lackschicht. Das kann auch zu lokaler Welligkeit in der Sichtfläche der applizierten Folie führen, die mittels einer darüber verfahrenen elastischen Walze nicht mehr zuverlässig weggedrückt werden kann. Außerdem resultiert aus dem schließlich rund um die so folierte Unterlage herum abzuschneidenden, von deren Geometrie unabhängig breiten Folien-Übermaß ein In erheblicher Menge anfallender und zu entsorgender Ausschuss.

Etwas ganz anderes stellt es dar, gemäß der DE 1 03 40 245 A1 Karosseriebereiche mit einem Satz von Folien passgenau manuell zu bekleben, die zunächst gemäß der Fläche und der Form der einander benachbart zu beklebenden Oberflächenbereiche zugeschnitten wurden.
Nach der DE 10 2005 003 212 A1 wird ein zu kaschlerender, etwa knaufförmiger Dekorträger unter Zwischenlage einer sternförmig In allen Richtungen variabel verspannten Dekorschicht in eine schalenförmige Negativ-Form des Dekorträgers eingesenkt.

In Erkenntnis der eingangs erwogenen Gegebenheiten liegt vorliegender Erfindung die technische Problemstellung zugrunde, bei sparsamerem Meterialeinsatz eine hochwertigere Folienapplikation zu erzielen, die praktisch auf beliebige klebstoffverträgliche Oberflächen applizierbar und auch, allenfalls unter Mitwirken von einigen eingewiesenen Fachleuten, im Zuge automatischer Bandfertigung einsetzbar ist.

Diese Aufgabe ist erfindungsgemäß durch das Zusammenwirken der im Patentanspruch 1 angegebenen wesentlichen Merkmale gelöst.
Danach wird die zu applizierende Folie, etwa eine handelsübliche Lackfolie, längs wenigstens eines Randes gemäß der Geometrie unter Beachtung auch der Topographie der damit zu beschichtenden Oberfläche einer Unterlage zugeschnitten, bei der es sich beispielsweise um ein Möbelstück, um ein Haushaltsgerät oder um ein Teil einer Autokarosserie handeln kann. Die Berandung des Zuschnittes folgt also nicht nur der Projektion der zu folierenden Oberfläche; zusätzlich wird beim Zuschnitt Übermaß nach Maßgabe der Koordinaten gegeben, bei denen die zu follerende Unterlage sich z.B. signifikant insbesondere aus derjenigen Ebene erhebt, die durch das Angreifen der Spannmittel definiert ist. Außerdem wird das anisotrope Dehnungsverhaltens des konkret zum Einsatz kommenden Follentypes berücksichtigt, Indem Im Prinzip in der Haupt-Streckrichtung der Spanneinrichtung ein geringes Untermaß eingehalten, und quer dazu ein geringes Übermaß zugegeben, wird. Denn durch das Strecken der Folie beim Aufbringen auf die Unterlage wird das Untermaß ausgeglichen; und die dabei auftretende Querkontraktion im Dehnungsbereich bereinigt das hier zuvor zugestandene Übermaß. Dabei kann, spätestens im Zuge des Aufbringens auf die Unterlage, ein vorübergehendes Strecken der der Lack- oder sonstigen Applizlerfolie in wenigstens einer ihrer Streckrichtungen bis über ihre Elastizitätsgrenze hinaus zweckmäßig sein, weil dann nach dem Aufbringen der Folie auf die Unterlage kein störendes elastisches Schrumpfen, der vorangegangenen Dehnung entgegen, mehr auftritt.

Die handelsübliche Applizlerfolie Ist mehrlagig aufgebaut. Unter der eigentlichen Lackschicht liegt eine, oft eigens durch Andruck aktivierbare, Kleberschicht, nachstehend verallgemeinernd als Adhäsionsschicht bezeichnet; und gegebenenfalls darunter eine rückwärtige, vor dem Aufbringen von der Applizierfolie abzuziehende Schutzfolie. Eine weitere Schutzfolle auf der Sichtfläche der Lackschicht wird erst abgezogen, wenn nach Einbringen von Druckkräften in die sichtseitige Schutzfolie und so durch die Lackschicht hindurch die Adhäsionsschicht vollflächig mit der Unterlage verklebt Ist.

Solche Applizierfolie wird also nicht mehr zunächst auf einem Modell der zu folierenden Unterlage abgeformt. um sie dann entsprechend vorkonfiguriert auf die Unterlage selbst umzusetzen. Vielmehr wird ein unter Berücksichtigung der Topographie der zu folierenden Unterlage und des anisotropen Dehnungsverhaltens der Folie optimierter Zuschnitt unmittelbar über die Unterlage hinweg unter Zugspannung auf deren Oberfläche abgeformt.

Zum Folieren wird die Oberfläche der Unterlage zunächst mit einer Flüssigkeit als Gleitmittel, z.B. mit entspanntem Wasser, benetzt, ehe die von der unteren Schutzfolie befreite Applizierfolie darüber unter Zugspannung möglichst passgenau abgesetzt wird; also zunächst noch auf der Unterlage schwimmend, um etwaige Abweichungen von der Soll-Position noch korrigieren zu können. Diese Zwischenschicht auf der Unterlage verzögert somit ein Verkleben der Applizierfolie auf der abzuformenden Unterlage, bis der Flüssigkeitsfilm seitlich über die Berandung des Folien-Zuschnittes herausgedrückt worden ist.

Im Prinzip ist die Applizierfolie erfindungsgemäß also - wenigstens längs eines Randes - ohne Übermaß zugeschnitten. Ein lokales Übermaß ist aber bereichsweise - und hier im Wesentlichen unabhängig von der Geometrie der zu folierenden Unterlage - anzutreffen, Insoweit um die zugeschnittene Folie herum Befestigungs- und Spannmittel wie Stempel, Klemmbalken, Klammem, Dome oder Sauger an programmgesteuert aktivierbaren und verfahrbaren Aktuatoren, sowie Messinstrumente, zum programmgesteuerten Aufbringen der Folie auf die Unterlage angreifen können müssen.

Der auf die Unterlage aufzubringende Zuschnitt der Applizierfolle wird beim Folieren nicht ganzheitlich in einer Haupt-Streckrichtung gedehnt. Vielmehr greifen in verschiedenen Richtungen jeweils mehrere Spannmittel nebeneinander an, deren dadurch eingebrachten Kraftvektoren sich voneinander, nach Maßgabe der beim Applizieren auf die Unterlage zu erwartenden Verformungen, unterscheiden, um lokal zu unterschiedliche Spannungen beziehungsweise Spannungssprünge in der Folie möglichst zu vermeiden. Das kann messtechnisch überwacht werden, um bedarfsweise diese lokal gerade eingebrachten Zugkräfte entsprechend zu modifizieren.

Das Aufsetzen des gespannten Folien-Zuschnittes auf die Unterlage kann ausgehend von einer (gegebenenfalls imaginären) Linie quer zur Haupt-Streckrichtung der Folie erfolgen. Diese Aufsetz-Linie verläuft zweckmäßigerweise durch einen verfahrenstechnisch kritischen Folierbereich, insbesondere beim Rande der Follerung. Längs dieser Linie kann dann beispielsweise ein der Topographie der Unterlage folgend geschwungen verlaufender Haltebalken mit schonender Anlagefläche auf die noch von der sichtseitigen Schutzfolie abgedeckte Applizierfolie abgesenkt werden, um diese auf der Unterlage zu fixieren. Von solcher Aufsetzzone aus erfolgt dann unter Zugbeanspruchung das Abformen der Applizierfolie mit ihrer rückwärtigen Adhäsionsschicht über die Unterlage hinweg.
Konturabhängig kann die gestreckte Applizierfolie aber auch am aus der Unterlage herausragendsten Punkt aufgesetzt und von hier aus strahlenähnlich in mehrere Richtungen abgeformt werden.

Bei der Aufsetzzone zum Abformen der Applizierfolie über die Unterlage hinweg kann es sich im nachfolgend behandelten Beispielsfalle eines zu folierenden Daches einer Fahrzeug-Karosserie insbesondere um die Oberkante des Rückfensters, eines Dachspoilers oder einer Fließheck-Klappe handeln. Die Applizierfolie wird, nicht nur in der Haupt-Streckrichtung, mittels relativ zur Unterlage am Folienrand angreifender, gegebenenfalls verfahrbarer Spannmittel über die zu folierende, gewölbte Dachfläche hinweg bis zur Oberkante der Frontscheibe aufgezogen.
In diesem Endbereich ist die Auswölbung wieder zurückgegangen, und oft verbreitert sich quer zu dieser Richtung die zu folierende Oberfläche. Um die Applizierfolie dennoch faltenfrei bis in den Eckwinkel über der A-Säule hinein aufzubringen, wird ein zum Angriff der Spannmittel zwischen den beiden A-Säulen sich erstreckender Folien-Überstand der Haupt-Streckrichtung entgegen bis fast zur Windschutzscheibe hin aufgeschlitzt. Jeder der daraus resultierenden beiden seitlichen Folien-Ausläufer wird, wiederum mittels programmiert betriebener Spannmittel, grob in Richtung der ihm benachbarten A-Säule und zusätzlich von einander fort nach außen gezogen, bis die Folierung sich jeweils auch ganz in die beiden erwähnten Eckbereiche hinein erstreckt; woraufhin der überstehende Folienrest hier passgenau abgeschnitten werden kann. Dieser vordere Folienbereich ist deshalb nicht in den übermaßfreien Zuschnitt einbezogen, sondern hier erstreckt die zunächst noch nicht längsgeschlitzte Folie sich auch über den Zwischenraum zwischen den beiden A-Säulen hinweg.

Es kann über auch zweckmäßig sein, das Folieren im Bereich etwa zwischen B-Säulen zu beginnen und nach beiden Richtungen, auf die A- und auf die C-Säulen zu abzuformen.

Auf der zu folierenden Oberfläche der Unterlage lokal auftretenden Singularitäten, wie regional konkav oder insbesondere konvex von der umgebenden Oberfläche sich abhebenden Regionen, können vor oder auch erst bei dem Aufziehen der Applizierfolle dadurch Rechnung getragen werden, dass hier deren Verformungseigenschaften hinsichtlich Ihres Streck- und Kontraktions-Verhaltens wahlweise in Richtung auf bessere Verformbarkeit oder auf stärkere Stabilisierung gezielt beeinflusst werden. Solches lokales Fördern oder Schwächen des Verformungsverhaltens der Folie kann durch mechanische, thermische oder chemische Einwirkung direkt auf die Applizierfolie oder auch auf die zu follerende Unterlage erfolgen; wofür entsprechende, programmgesteuert aktivierbare Aktuatoren etwa über der aufgespannten Folie verfahrbar oder fest positioniert sind. Eine Wärmebeeinflussung zum Erhöhen der Geschmeidigkeit der Folle beim Abformen etwa eines Domes auf einem zu follerenden Stahlblech Ist auch durch dessen Induktionserwärmung möglich, Um andererseits über eine bestimmte Strecke längs der Spannrichtung die Querkontraktion der Folie zu schwächen, wird wenigstens ein Längsschnitt entsprechender Länge symmetrisch zur Streckbeanspruchung In die Folie eingebracht, dessen Schlitz sich später, beim Rakeln der Lackschicht, wieder schließt. Eine kältebedingt gesteigerte Zähigkeit der Applizierfolie verhindert gezielt ein Abformen unerwünschter lokaler Strukturen auf der zu folierenden Oberfläche.

So wird vor dem Absenken der gespannten Folie auf die damit zu follerende Unterlage durch Beeinflussen des Verformungsverhaltens von Teilflächen der Folie berücksichtigt, ob aus der örtlicher Topographie oder Geometrie der Unterlage besondere Anforderungen an eine Verformung oder Entlastung der Folie resultieren. Durch Nivellieren der Spannungszustände Ober der Folie wird einem Auftreten von Spannungsspitzen entgegengewirkt, die sonst zu Strukturschäden wie Bruch von Lack- oder Kleberschichten führen könnten.

Zusätzlich kann beim Aufbringen der Applizierfolie die Spannungsverteilung in Längs- und Querrichtung durch am Folienrand angesetzte Zugmessinstrumente überwacht werden. Kritische Lastspitzen können dann, gegebenenfalls zusätzlich zu den beschriebenen lokalen Entlastungen, gezielt dadurch abgebaut werden, dass mehrere der einander parallel orientierten Spannmittel mit unterschiedlichen, regelbaren Kräften parallel zur Haupt-Streckrlchtung, und bei komplizierter Geometrie bedarfsweise auch dagegen verschwenkt, an den Zuschnitt der Applizierfolie angreifen.

Zweckmäßigerweise sind die lokal randseltig an die zugeschnittene Folie angreifenden Spannmittel ebenso wie die über der aufgespannten Folle angeordneten Aktuatoren, problemlos umpositionierbar, an einem fachwerk- oder gitterförmfgen Rahmen installiert, der Im Wesentlichen parallel zur aufgespannten Applizierfolie orientiert ist, diese aber seltlich überragt. Der Rahmen ist vorzugsweise programmgesteuert Im Raum verschwenkbar etwa an beweglichen Pfeilern gelagert. Dadurch kann er die aufgespannte Folie gezielt auf der Unterlage absetzen - gesteuert und kontrolliert durch Video-Messtechnik oder mittels Richtmarken, wie sie etwa zum Einkleben von Frontscheiben in Fahrzeugkarosserien im Einsatz sind. Weil das Verhalten der Folie bekannt ist und ihr Zuschnitt bereits passgenau auf die Topographie der zu folierenden Unterlage bemessen ist, kann solches Applizieren programmgesteuert erfolgen, geeignet insbesondere auch für automatisierte Fertigung.

Das Abformen auf der zu folierenden Unterlage kann dann etwa mittels wenigstens einer kleinen harten Walze erfolgen; besser noch mittels der Andruckkante wenigstens eines Rakel-Spachtels, der unter Druckausübung quer zu dieser Kante manuell oder durch die Bewegung eines entsprechend programmierten Roboterannes über die, erst danach zu entfernende, Schutzfolie auf der Applizierfolie hinweg gezogen wird.

Abschließend sind lediglich noch die Angriffspunkte der Zug- und Meßmittel am Rand der applizierten Folie abzutrennen; damit verbleiben nur noch vergleichsweise minimale Ausschussmengen.

Das alles kann angelernten Fachkräften anvertraut werden, wie sie auch an anderen Stellen einer automatisierten Bandfertigung Einsatz finden.

Um eine aufgespannte, Insbesondere selbstklebende Folie auf eine auch unebene Unterlage aufzubringen, wird die Folle also erfindungsgemäß, längs wenigstens einer Berandung, nach Maßgabe Ihrer Anisotropie in ihrer Haupt-Streckrichtung mit Untermaß gegenüber der Kontur der Unterlage zugeschnitten und vorübergehend auch bis zum Überschreiten der Elastizitätsgrenze gedehnt. Quer dazu kann ein gezieltes Zuschnitts-Übermaß Infolge Querkontraktion auf die Geometrie der zu folierenden Unterlage zurückgeführt werden. Die Zugspannungsverteilung in der Applizierfolle kann durch lokal eingebrachte Entlastungen und durch, in auch voneinander abweichenden Richtungen, paralleles Angreifen Individuell steuerbarer Spannmittel optimiert werden, ehe die dann über der Unterlage abgeformte Applizierfolie infolge dazwischen gelegener Adhäsionsschicht mit jener verklebt wird.

## Patentansprüche

1. Verfahren zum Aufbringen durch Absetzen und Abformen einer zugeschnitten aufgespannten Applizierfolie auf die Oberfläche einer auch unebenen Unterlage, etwa auf ein Tell einer Kraftfahrzeug-Karosserie, eines Gerätes oder eines Möbels, **dadurch gekennzeichnet, dass** die Applizierfolle nach Maßgabe der Geometrie der zu follerenden Unterlage längs wenigstens eines Randes der Unterlage unter Berücksichtigung auch von deren Topographie und außerdem mit Übermaß quer zur Richtung Ihrer vorgegebenen Haupt-Streckrichtung zugeschnitten wird, woraufhin die zugeschnittene Applizierfolie aufgespannt und, quer zu ihrer Haupt-Streckrichtung orientiert, auf der zu folierenden Unterlage abgesetzt sowie dann davon fort gerichtet In dieser Streckrichtung über der Unterlage abgeformt wird, wobei die Applizierfolie in wenigstens Ihrer Haupt-Streckrichtung vorübergehend auch bis über Ihre vorgegebene Elastizitätsgrenze hinaus gedehnt wird.

2. Verfahren nach einem der vorangehenden Ansprüche, **dadurch gekennzeichnet, dass** die Applizierfolle nach Maßgabe der gegebenen Inhomogenität ihres Streckverhaltens mit Übermaß quer zur Richtung ihrer Haupt-Streckrlchtung zugeschnitten wird.

3. Verfahren nach einem der vorangehenden Ansprüche, **dadurch gekennzeichnet, dass** die Applizierfolie In Haupt-Streckrichtung mit Übermaß zum Festlegen eines Randes auf der Unterlage zugeschnitten wird.

4. Verfahren nach einem der vorangehenden Ansprüche, **dadurch gekennzeichnet, dass** der aufgespannte Zuschnitt mittels an wenigstens einem Rand angreifender Spannmittel bereichsweise unterschiedlich stark gestreckt über die Unterlage abgeformt wird.

5. Verfahren nach einem der vorangehenden Ansprüche, **dadurch gekennzeichnet, dass**, beim Abformen des aufgespannten Zuschnittes über die Unterlage, Spannungsinhomogenitäten vermieden werden, indem die Applizierfolle vor, spätestens bei dem Absetzen des Zuschnittes auf die Unterlage je nach der örtlichen Topographie der Unterlage bereichsweise durch mechanische, thermische oder chemische Beeinflussung be- oder entlastet wird.

6. Verfahren nach Anspruch 5, **dadurch gekennzeichnet, dass** der gestreckt auf der Unterlage abgelegte Zuschnitt bereichsweise von der, insbesondere induktiv, erwärmten Unterlage her entlastet wird.

7. Verfahren nach Anspruch 5, **dadurch gekennzeichnet, dass** in den Zuschnitt symmetrisch zu dessen Längsbelastung wenigstens ein Längsschnitt eingebracht wird.

8. Verfahren nach Anspruch 7, **dadurch gekennzeichnet, dass** ein Folien-Überstand der Haupt-Streckrlchtung entgegen aufgeschlitzt wird.

9. Verfahren nach einem der vorangehenden Ansprüche, **dadurch gekennzeichnet, dass** vermittels einer eigens wieder zu entfernenden Zwischenschicht, wie einem Feuchtigkeitsfilm Insbesondere aus entspanntem Wasser, zwischen der Unterlage und dem aufgesetzten Zuschnitt ein Aktivieren einer Adhäsionsschicht unter der Applizierfolie verzögert wird.
